# EUROPEAN PATENT SPECIFICATION

(11) **EP 3 961 533 B1**
(45) Date of publication and mention of the grant of the patent: **18.12.2024**
(21) Application number: 21191754.7
(22) Date of filing: 17.08.2021
(51) Int. Cl.: G06Q 10/08, G07F 7/06, G07F 9/10, G07F 11/62, G07F 17/00

(54) **AUTONOMOUS FOOD STATION**
AUTONOME LEBENSMITTELSTATION
STATION ALIMENTAIRE AUTONOME

(30) Priority: 18.08.2020 US 202063066904 P; 23.10.2020 US 202063105056 P; 28.07.2021 US 202117387936
(43) Date of publication of application: 02.03.2022
(73) Proprietor: T3 Micro, Inc., Venice, CA 90291 (US)
(72) Inventor: Glucksman, Dov, Winchester, 01890 (US); Rojee, Andrew, Derry, 03038 (US); Miller, Michael, Tewksbury, 01876 (US); Yu, Kent, Pacific Palisades, 90272 (US)
(74) Representative: Aldridge, Christopher Simon

(56) References cited:
- US-A1- 2016 335 833
- US-A1- 2019 050 799
- US-A1- 2019 385 118

## Description

### FIELD OF THE INVENTION;

This invention relates to the food service industry. More particularly, the invention relates to means for providing pre-ordered hot and cold foods to users in a vending system.

### BACKGROUND;

Vending machines which provide cold sandwiches and snacks are well known. The machines are regularly stocked with a selection of items, each indicating an item price, and customers may insert payment and select one of the provided items for consumption at the stored temperature or for heating remotely. Such machines offer a limited number of items chosen by a food partner in some remote location, which may or may not be the type of food truly desired by the customer, forcing the customer to choose the "least undesirable" item.

There is a need for, and it is an object of the invention to provide, an autonomous food storing and delivering system for enabling consumers to remotely pre-order a desired food, snack, or entire meal from an extensive menu of hot or cold choices, then to receive the chosen food, snack, or meal at a conveniently nearby location in a fresh and optimally temperatured state at a pre-chosen time or at an amendable time.

Additional needs and means to satisfy those will be learned, become apparent, or become obvious upon review of the disclosure provided herein.
US2019/050799 (Goldberg) discloses a kiosk that may be part of a multi-modal food distribution system in which the kiosk may operate in one or more various modes, including a kiosk vending mode, a constellation mode, and a cook en route mode to vend hot, prepared food to customers. The kiosks in the system are configurable to change between each of the different modes depending upon information received by the system and the kiosk is part of a kiosk-based food preparation system.
US2019/385118 (Deemter) discloses a food locker that has a housing, a food support member, a first door, a second door, and a lock. The housing includes a front wall a front wall, a rear wall, and a chamber and the front wall includes a first opening in communication with the chamber. A food support member is disposed within the chamber. The first door is supported by the housing and is movable between a closed position and an open position and the food support member is accessible through the first opening when the first door is in the open position.
US2016/335833 (Huang) discloses an automatic-cooking-and-processing vending system for frozen-food, having a low-temperature chamber, an object-moving system, product shelves, a low-temperature chamber equipment, and a food container. The low-temperature chamber equipment is inside the low-temperature chamber, and the low-temperature chamber equipment contains a hot-air source and a humid-air source. The product shelves are inside the low-temperature chamber with disposable food containers placed on and the object-moving system is inside the low-temperature chamber. The vending system has an-automatic-cook-and-processing.

### SUMMARY OF THE INVENTION;

The invention is directed to a food station as set out in accompanying claim 1. Preferred features are set out in the accompanying subclaims. Thus, the invention may be embodied in or practiced using an autonomous system including software and hardware for enabling consumers to order and pay for a desired food, snack, or meal from an extensive menu of hot or cold choices, and from one or more food, snack, or meal providers, then to receive the chosen food, snack, or meal in a fresh and optimally temperatured state at a pre-chosen future time.

A novel and non-obvious aspect of the system may reside in its ability to enable consumers to receive the ordered and paid for food, snack, or meal at a convenient location at the pre-chosen time.

Another novel and non-obvious aspect of the system may be having delivery Stations (autonomous vending apparatuses) conveniently placed where the consumers may receive the chosen food, snack, or meal.

Another novel and non-obvious aspect of the system may reside in providing a convenient means for enabling a consumer to choose, pay for, and order a consumable for receipt at a later time and to receive a security key, such as a code, for identification and access at the Station.

Another novel and non-obvious aspect of the system may reside in delivering the consumable in a ready-to-consume condition at or around that later time.

Another novel and non-obvious aspect of the system may reside in providing the consumable in sealed portion container.

Another novel and non-obvious aspect of the system may reside in its ability to enable one or more food partners (consumable providers) to deposit the pre-ordered consumables into a chamber within the apparatus which is adapted to store the consumable at a temperature capable of maintaining the freshness of the consumable until an appropriate time before the later time, to begin warming or cooling the consumable at that appropriate time so that it will be ready to consume at the later time, and for moving the consumable to a delivery port at the demand of the identified consumer at or after the later time.

Another novel and non-obvious aspect of the system may reside in providing a convenient means for enabling a consumer to reschedule the later time at any reasonable time prior to the appropriate time.

Another novel and non-obvious aspect of the vending system may reside in using the security key for allowing only the consumer to reschedule the later time.

Another novel and non-obvious aspect of the system may reside in its ability for receiving the consumable from the consumable provider, moving it into its storage chamber, maintaining the storage temperature in the chamber, recognizing the appropriate time, providing the warming or cooling in the chamber, recognizing the later time, recognizing the key when provided by the consumer, transporting the consumable to the delivery port, and allowing access to the consumable by the consumer.

Another novel and non-obvious aspect of the system may reside in its labor-saving advantage based on the ability for receiving the consumable from the consumable provider, delivering it, in bulk, to the apparatus, randomly placing the consumable containers into an empty storage chamber, recognizing the content of the consumable container for providing the appropriate warming or cooling in the chamber, for recognizing the later time, for recognizing the key when provided by the consumer, for transporting the consumable to the delivery port.

Another novel and non-obvious aspect of the system may reside in the small amount of wall space the unit occupies as the consumer does not have to access the consumable storage directly but that the consumable is delivered to the Consumer through a hatch, located at a height determined to be most convenient for the average Consumer.

### BRIEF DESCRIPTION OF THE DRAWINGS:

Exemplary embodiments of an autonomous food station in accordance with or useful in practicing the invention are shown in the accompanying Drawings, of which;
FIG. 1 is a flow chart of the ecosystem of a first autonomous food station;
FIG. 2 is a cross-sectional view of the portion containers of the station of Fig 1;
FIG. 3 is a schematic diagram of the generation and circulation of the cooling and heating fluids of the station of Fig 1;
FIG. 4 is a cross-sectional view circulation of the cooling and heating fluids to the individual cubbies of the station of Fig 1;
FIG. 5 is a perspective view of the transport system of the station of Fig 1;
FIG. 6 is a perspective view of the cartesian system of the station of Fig 1;
FIG. 7 is a cross-sectional view of the hatch of the station of Fig 1;
FIG. 8 is a perspective view of the hatch of the station of Fig 1;
FIG.s 9A through 9L is a series of chronologically-arranged perspective views showing the movement of the portion container and portion container carrier of the station of Fig 1;
FIG. 10 is a front view of the station of Fig 1;
FIG. 11 is a side cross-sectional view of the station of Fig 1;
FIG. 12 is a left perspective view of the station of Fig 1 with its left cubby access panel opened;
FIG. 13 is a right perspective view of the station of Fig 1 with its right cubby access panel opened;
FIG. 14 is a front perspective view of the unit base compartment of the station of Fig 1;
FIG. 15 is a rear perspective view of the unit base compartment of the station of Fig 1;
FIG. 16 is a cross-sectional view of the portion container of the station of Fig 1;
FIG. 17 is a cross-sectional view of a cubby of the station of Fig 1;
FIG. 18 is a top view of a cubby of the station of Fig 1;
FIG. 19 is an exploded view of the heating and cooling terminals of a cubby of the station of Fig 1;
FIG. 20 is a perspective cross-sectional view of a cubby of the station of Fig 1;
FIG. 21A is an exploded view of a cubby of the station of Fig 1;
FIG. 21B is a perspective view of the portion container carrier of the station of Fig. 1;
FIG. 22 is a left perspective view of a second autonomous food station;
FIG. 23 is a right perspective view of the station of Fig 22 with its left cubby access panel opened; and
FIG. 24 is a cross-sectional view of the station of Fig 22.

### DETAILED DESCRIPTION OF AN EXEMPLARY EMBODIMENT;

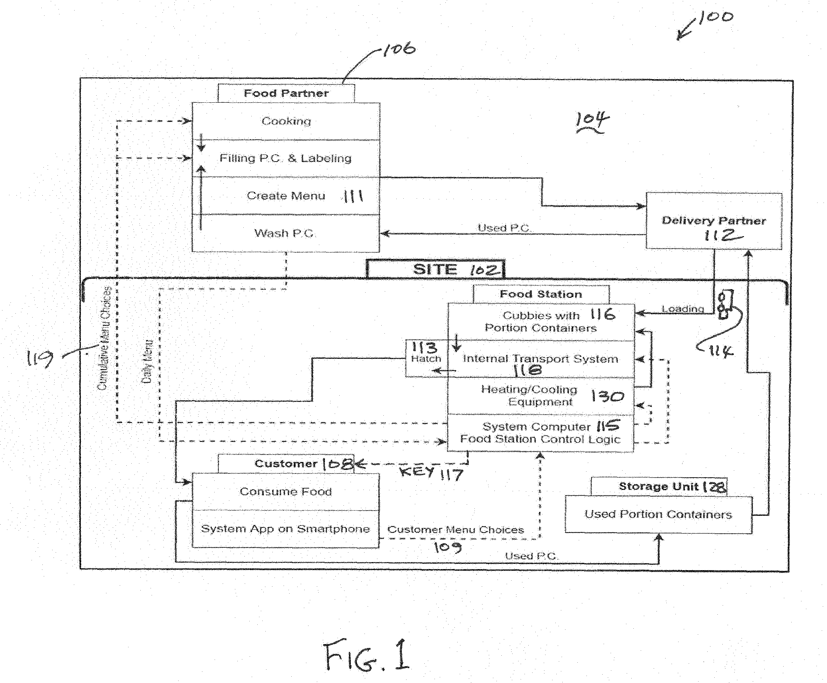

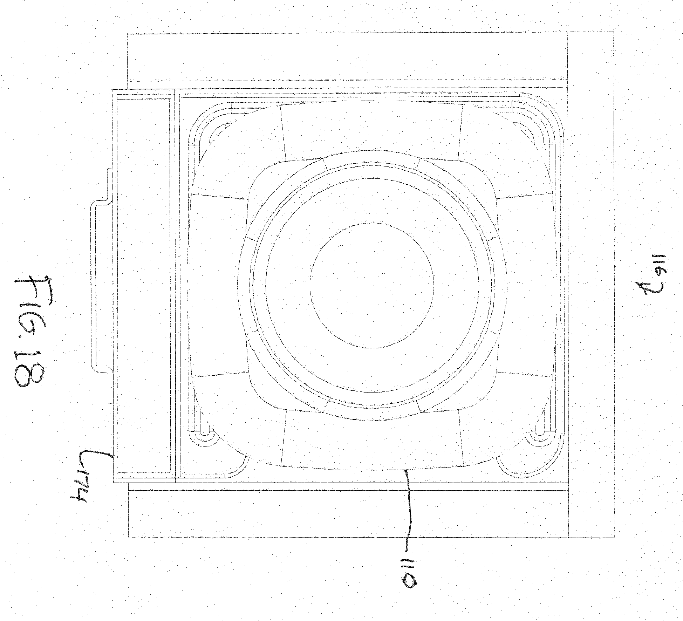

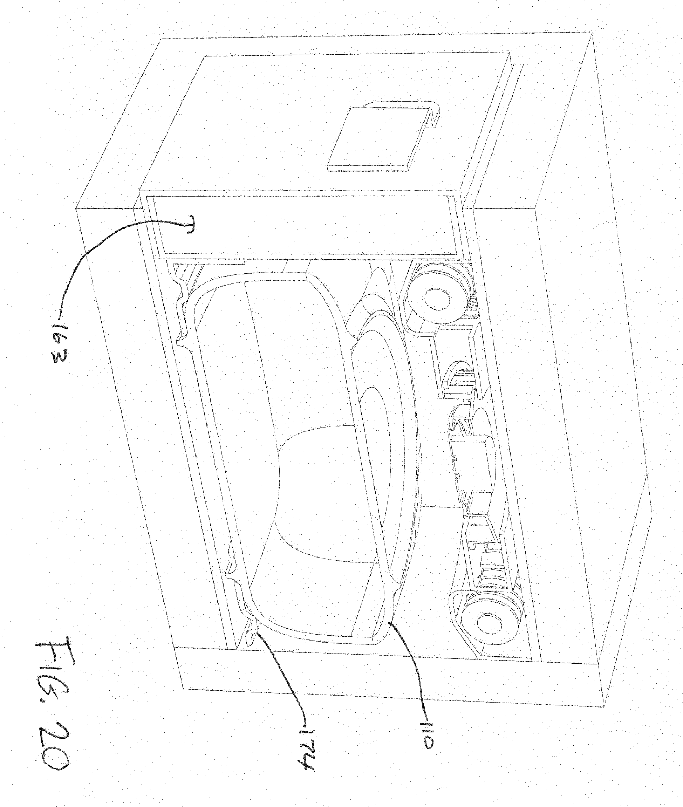

Referring to Figs 1 through 21B, there is shown a system 100 based around a first autonomous Food Station 102. Numerous of such Stations may be conveniently positioned around a neighborhood, town, or city and may be owned/operated by the same entity/entities or may be owned by different entities.

An exemplary flow chart of operation 104 of the system for one of the Stations is shown in Fig 1 and described as follows to demonstrate the system and process.

A remote Food Partner (food provider) 106 may own the Station or be hired by the Station's owner to prepare and supply meals for the Station. More than one food provider may prepare and supply meals to any given Station or Stations, so that consumers may have the option to purchase meals of numerous types. The food providers may be well known restaurants whose brand more readily attracts consumers, or the food provider may be commissaries. The owner may place numerous Stations around town or may be a franchisee who buys one or more Station(s) from a franchiser who may in turn control and partially profit from the meals provided. For instance, a popular restaurant chain may sell franchises and each Station's franchisee may be given a larger menu which is limited to meals from that restaurant and may be required to make their smaller menu choice from that larger menu. The food provider might then profit from the sale of the meal to the Station owner and the Station owner may profit from the sale of the meal to the end customer. Or the Station owner may be one and the same as the food provider and thereby obtain all profits. Or the Station owner may pay a location owner a rental fee or a share of the profits for being allowed to place the Station(s) in one or more convenient location(s) owned by the location owner.

The Station Owner may place the Stations in select locations such as apartment building lobbies, office buildings, office lunchrooms, workplace lobbies, university cafeterias, hospital cafeterias, taverns, etc., ... typically anyplace that is convenient to consumers who are in the same vicinity day after day.

Either the food provider or the Station Owner may always offer the same menu or may generate a weekly menu with a range of meal choices (a steak dinner, soup and sandwich, burger and fries, etc.), or with a range of meal components (proteins, sides, vegetables, etc.), or a range of ethnicities (Italian, Chinese, Mexican, etc.), and with a range of desserts (hot apple pie, cold desserts, room temperature pastries, etc.).

A Customer (the ultimate consumer) 108 then selects a meal from a list of Cumulative Menu Choices 111 offered by the food provider and orders the selected consumable in advance using a system program, which may be a Smartphone App, may be a call-in phone number, may be an on-line site, or may be a user-interface on the Station. The consumer reviews the menu and places a Customer Menu Choice 109 say a day in advance of the desired receipt of the meal (Day 0). This order is stored in Food Station Control Logic 115 and the consumer is provided with an Identification Key 117. Cumulative Customer Menu Choices 119 are transmitted to the Food Partner who then prepares the meal and places it into a Portion Container 110. Each Portion Container is provided with an identifying label that can be read and the data stored in the Food Station Control Logic.

On the morning of Day 0, the Portion Containers are picked up from the food provider and delivered to the Station by a Delivery Partner 112, or may be delivered by the food provider, preferably in a Refrigerated Transport Unit 114. The containers are randomly loaded into individual Cubbies 116 in the Food Station.

After all Portion Containers are loaded into their Cubbies, an Internal Transport System 118 transports each Portion Container to an Identifier Station 122 to have its Identifying Label 124 scanned and then be returned to its Cubby. Food Station Control Logic links the identified meal with the associated identification key and its Cubby. Each meal may have a meal preparation instruction specific thereto. This instruction may be stored in the logic's memory or may be provided to the logic by a code on the Identifying Label. For instance, a soup may be best served at 160F while a grilled cheese sandwich may be best served at 130F, and a tuna sandwich may be best served at room temperature. This preparation instruction would also be linked to the Cubby.

The information on the Identifying Label, the Cubby number, the identification key, and the preparation instruction for each loaded Cubby are stored in the Food Station Control Logic. After the Identifying Labels have been read, the Food Station Control Logic commands the system to refrigerate all the Cubbies containing Portion Containers, and to maintain them at say 37F, being considered a temperature suitable for extended safe storage of cooked food, and a temperature where the taste and flavor of the food is not affected within the typical time the consumable is kept in the Station.

Assuming a specific Portion Container holds a meal to be delivered warm or hot, then one hour or so before the schedule (or an amended) pick-up time, the Food Station Control Logic will command heating of the Cubby and its Portion Container containing the food to be served to a temperature of say 140F, or some other appropriate temperature, and keep it at that temperature until it is ready to be picked up. If the food is to be served cold, it may be maintained at the refrigerated temperature. If the food is to be served at room temperature, it may be warmed only to room temperature.

Customers coming to pick up their food will first identify themselves to the Food Station Control Logic using their identification key. The Food Station Controller then directs the Internal Transport System to pick up the appropriate Portion Containers and to deliver them to a Collection Hatch 113. The Food Station Control Logic will stop the heating or cooling of Cubbies that no longer contain Portion Containers.

After Customers consumed their meals, they may bring the empty Portion Containers and place them in the Storage Unit 128, where they are kept in a moist and warm atmosphere until the Delivery Partner picks them up the following morning to deliver them to the Food Partner, to be washed and sterilized for reuse. The Storage Unit may be a large container external of the Station intended merely to collect the spent Portion Containers or may be an internal function and portion of the Station. If internal, the Storage Unit may have means to move, scan, and identify the returned Portion Container and the Customer may then receive a return deposit or credit against his account.

In the event that the Portion Containers are disposable, compostable or recyclable the Portion Containers may be identified by the appropriate disposal icons or terms for the Customer to be guided by.

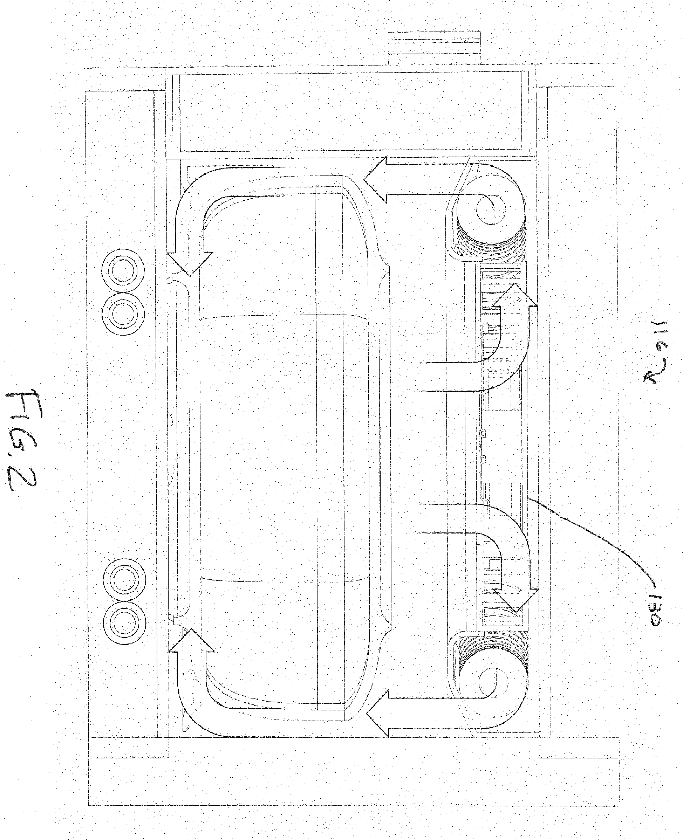

A typical Portion Container within a typical Cubby is shown in Fig 2. Each Portion Container is cooled and heated independently of the other Portion Containers, each held in an independent Cubby with its own independent cooling and heating terminal. Also shown is the Cubby's Cooling and Heating Terminal 130.

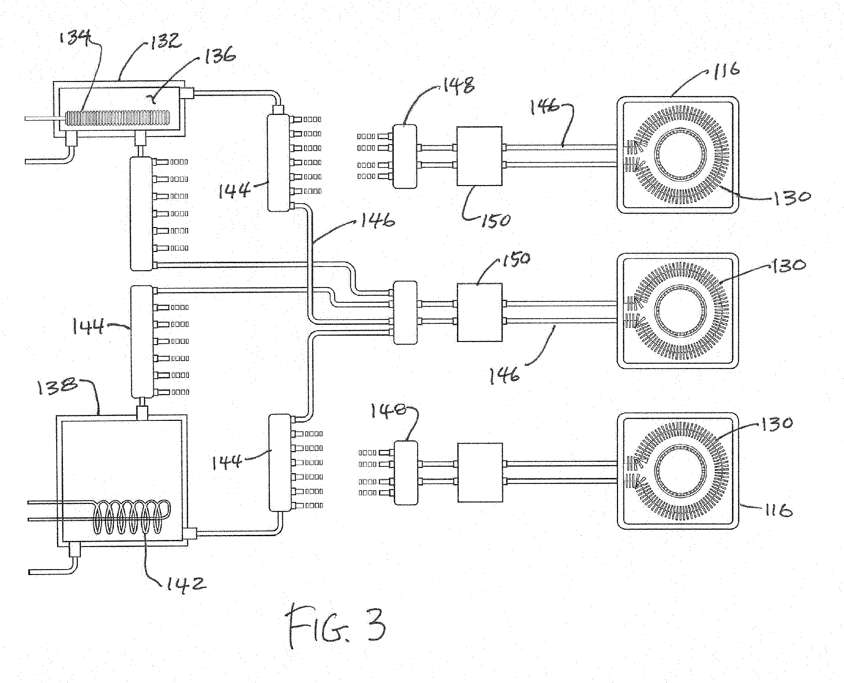

A schematic representation of the system cooling and heating arrangement is shown in Fig 3. It includes a conventional 4000 BTU refrigeration system 132 with a shell and tube evaporator 134 for cooling a thermal fluid 136, and a conventional boiler 138 including a submersed electric heating element 142. The system also includes headers 144 for connecting to a series of circulation tubes 146, valves 148, and individual pumps 150 for driving the fluids through the Cooling and Heating terminals. While Fig. 3 shows individual pumps, such pumps may be replaced by one pump and a multitude of valves, serving to supply heated or chilled thermal fluid to the cooling and heating terminals.

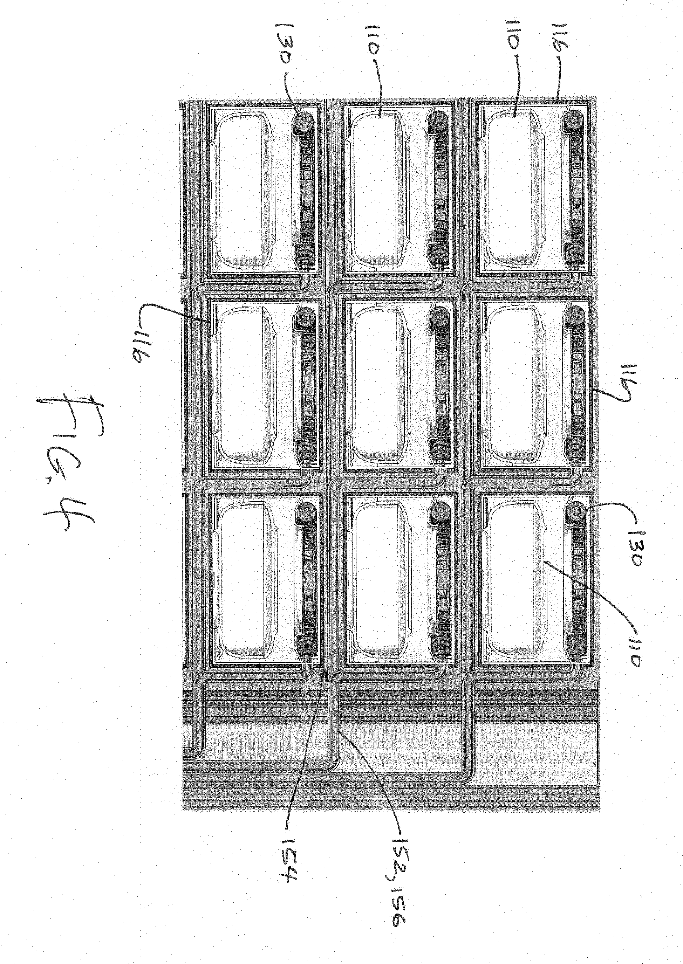

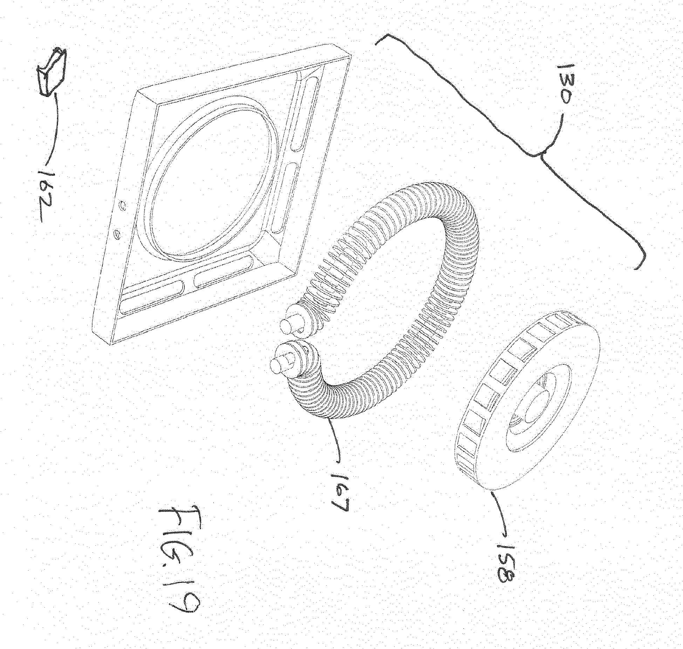

The Cubby cooling and heating arrangement is shown in Figs 4 and 19. Flexible insulated tubes 152 are channeled through a 25 mm gap 154 between the Cubbies. 12 mm diameter tubes are used as well as low-voltage insulated electric wires 156 connected to Cubby fans 158 and NTC temperature sensors 162. A preferred assembly sequence is to lay the tubes and wires into the gaps between the Cubbies, connect their ends as needed, and blow-in expandable polyurethane insulation after the tubes and electric wires have been tested and found to operate satisfactorily.

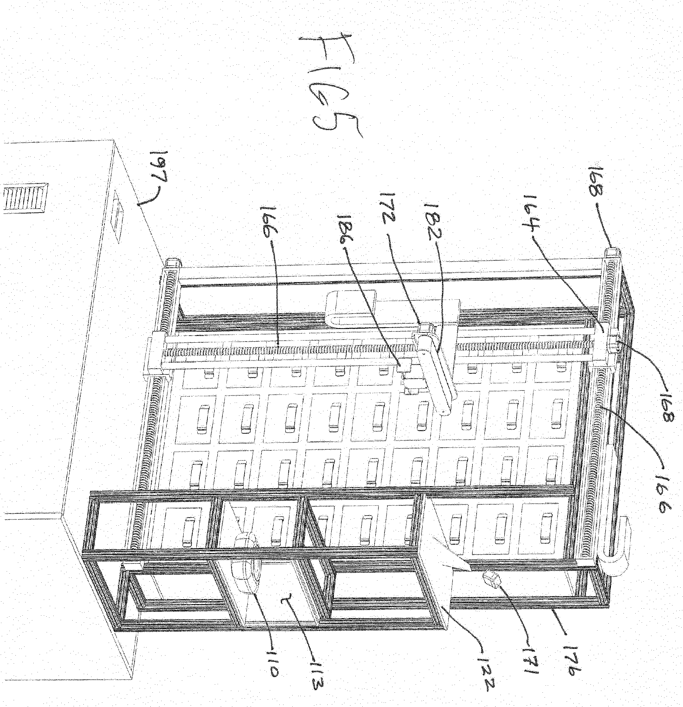

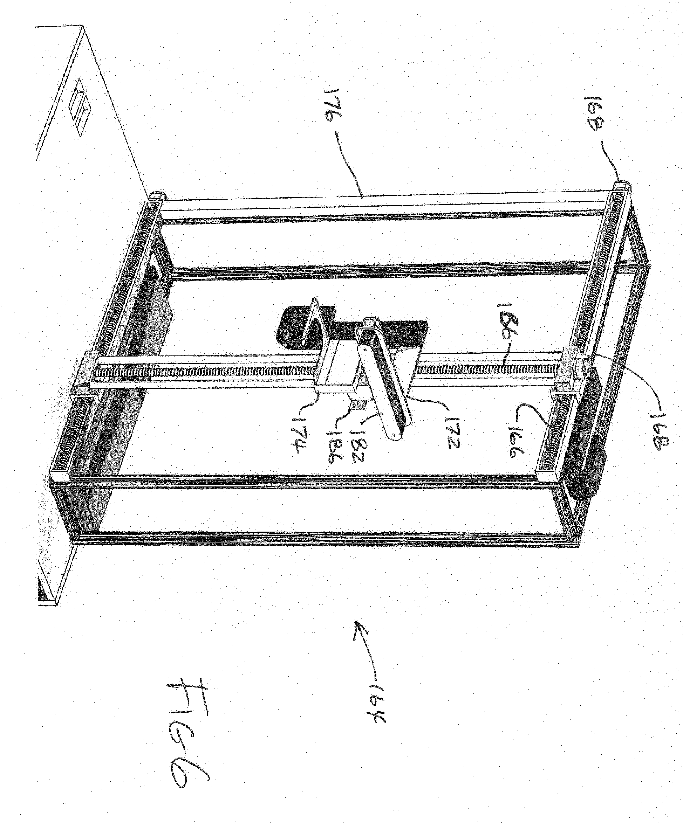

As seen in Figs 5 and 6, a Cartesian transport system 164 is employed to move the Portion Containers within the Station. The system operates along X, Y, and Z axes to transport the containers, comprising drive spindles 166 and stepper motors 168, as well as an End-Effector 172 adapted to pick up Portion Container Carriers 174 which are located to either side of the transport system.

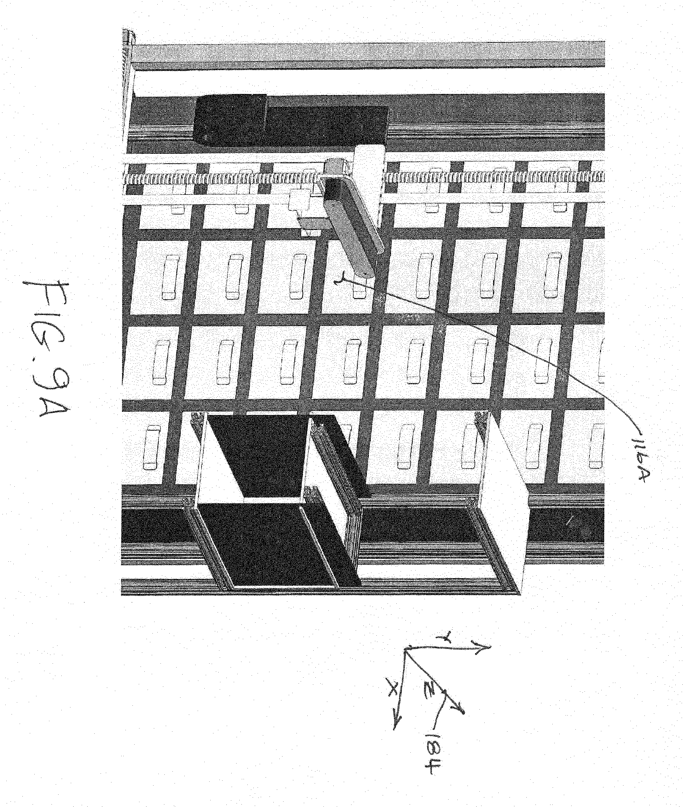

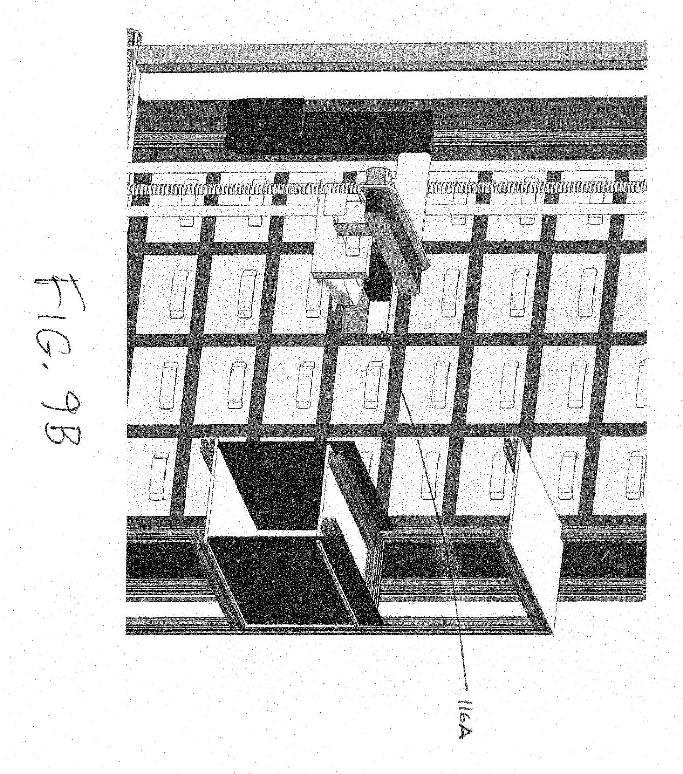

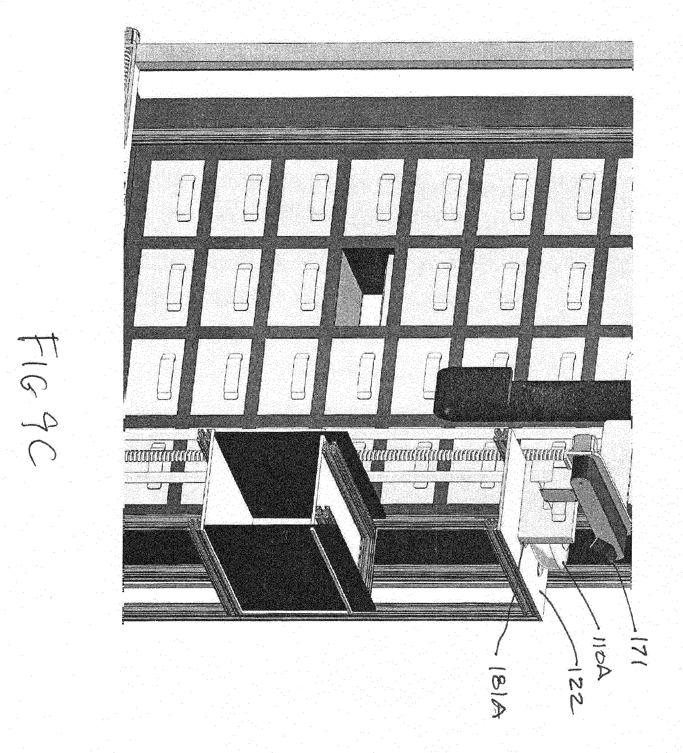

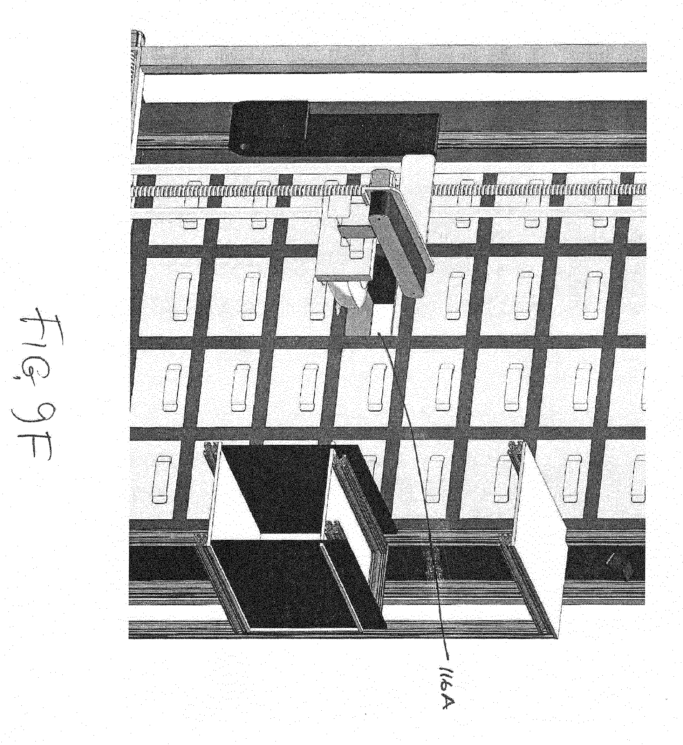

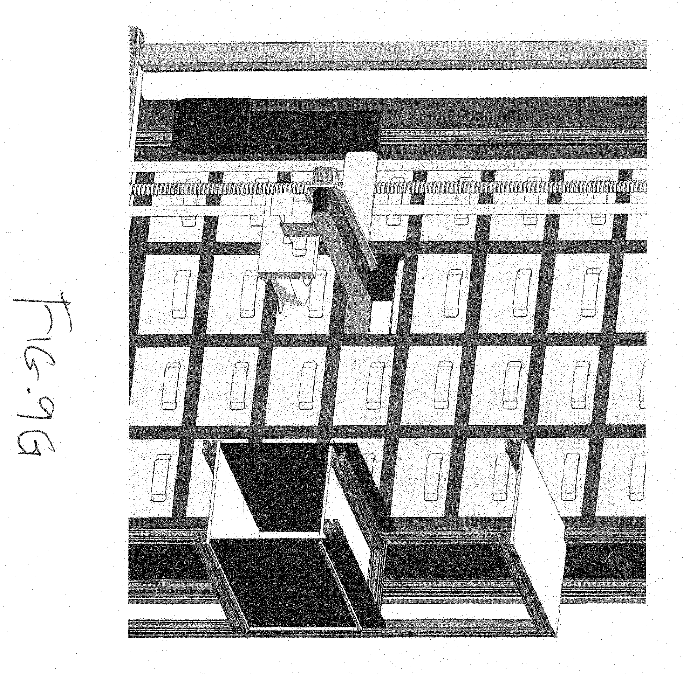

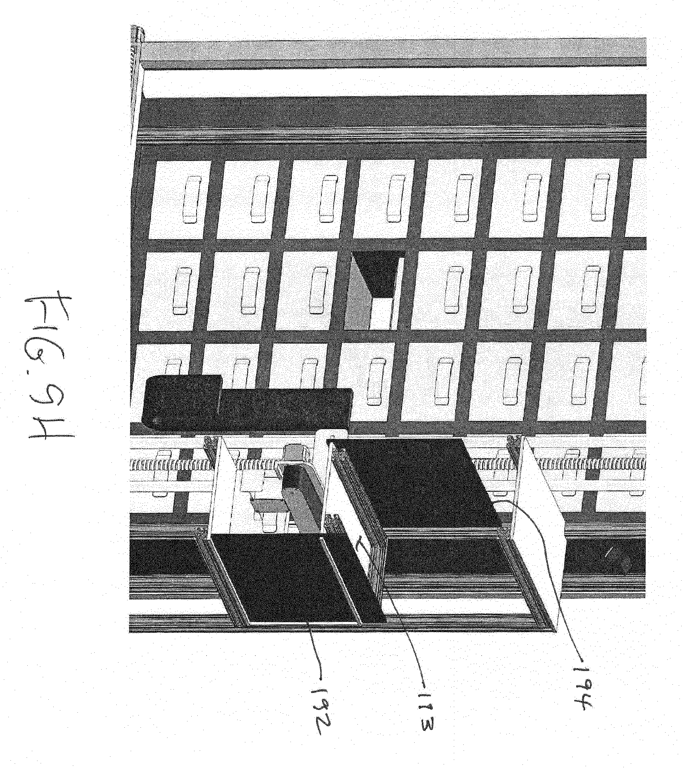

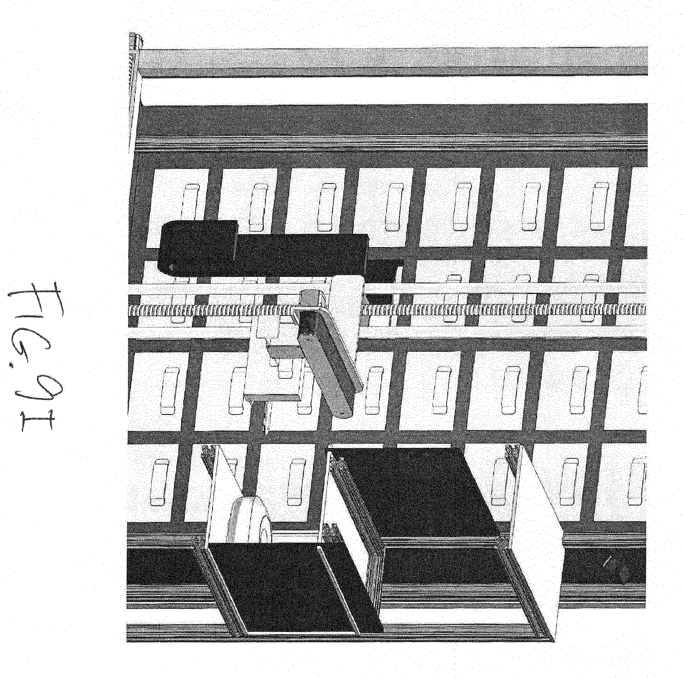

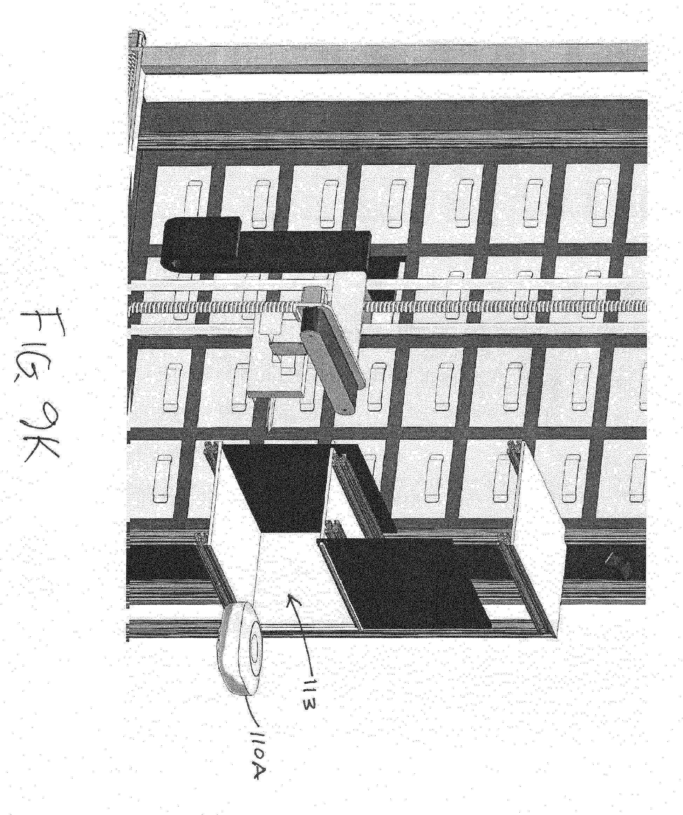

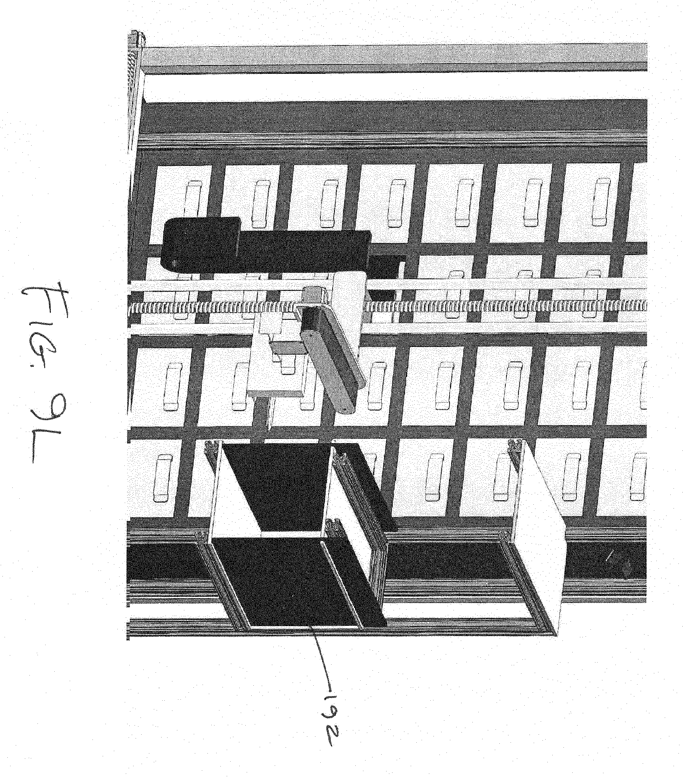

Referring to Fig 9A, the X axis is horizontal and runs side-to-side relative to the Station, the Y axis is vertical, and the Z axis is horizontal and runs front-to-back relative to the Station.

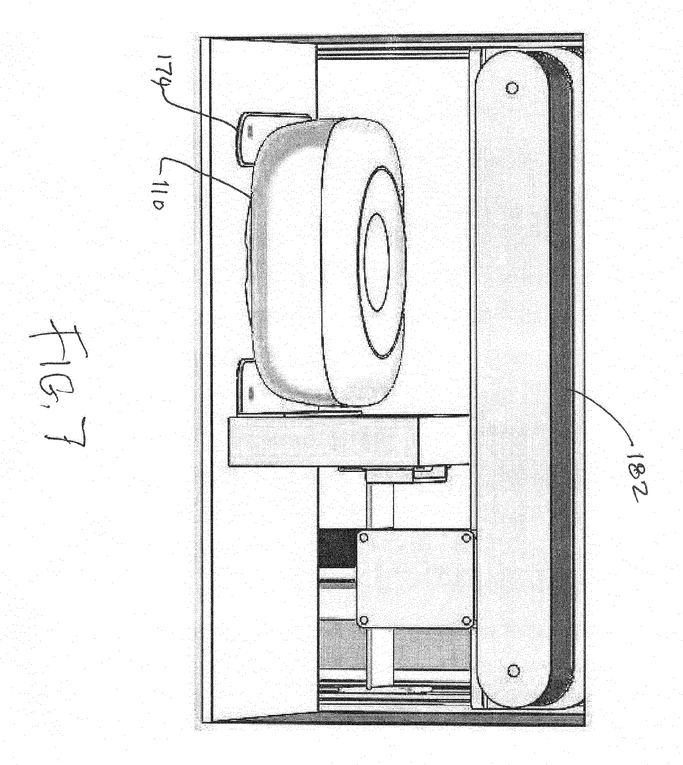

The Cartesian system includes a support-frame 176, the drive spindles, the stepper motors, and power and control cables. The End-Effector latches on to the Portion Container Carrier and delivers it to the Hatch. As shown in Fig 7, the End-Effector is mounted on a Stepper Motor driven belt 182 for movement in the Z axis 184. The End-Effector includes two T-shaped brackets 186, one on the left and one on the right, for grabbing the Portion Container Carriers on the left and right sides respectively. Alternately the End-Effector may include a single T-shaped bracket that may swivel to the left or the right for grabbing portion container carriers on the left and right sides respectively.

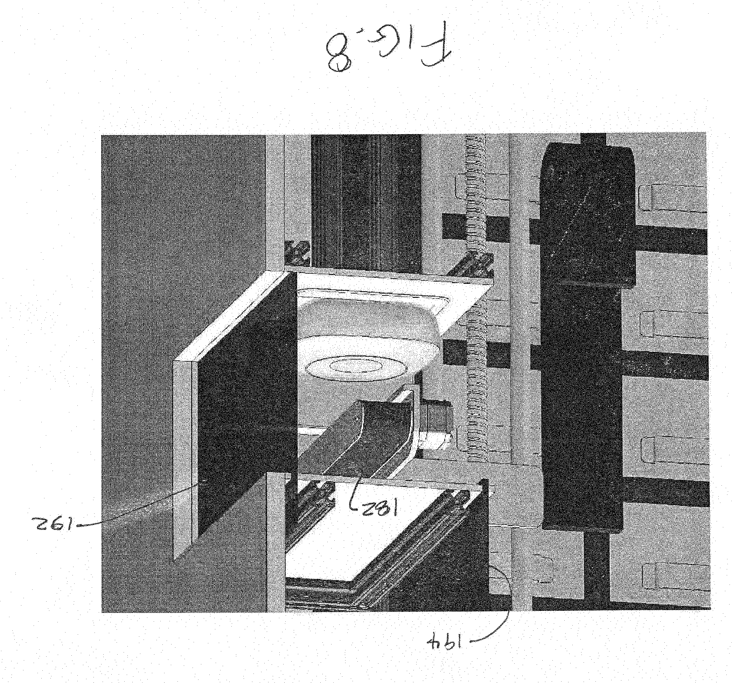

Referring to Fig 8, the Hatch include two shutters, Front Shutter 192 facing the Customer and Rear Shutter 194 at the back of the Hatch. These shutters are programmed to open and close during the delivery into the Hatch and the collection of the Portion Containers in order to help maintain a safe and sanitary condition within the station.

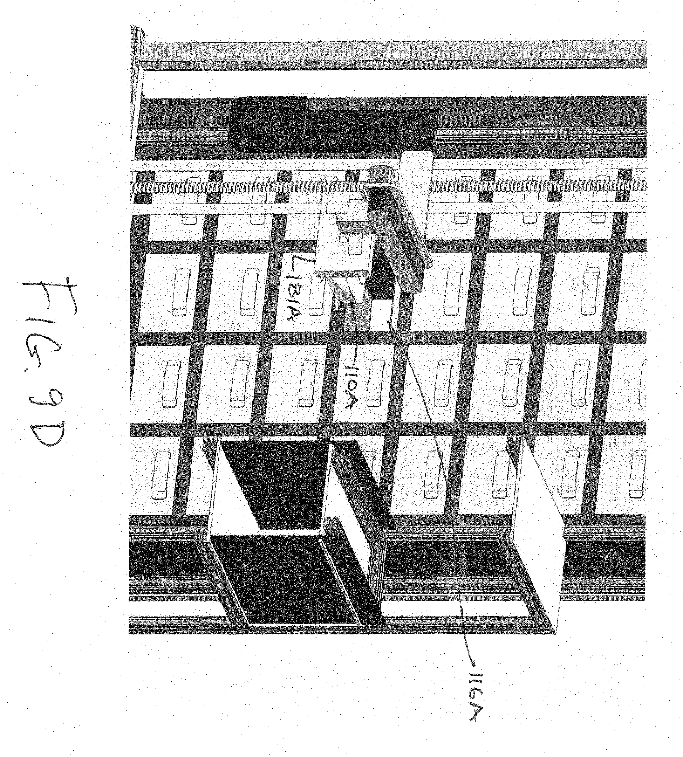

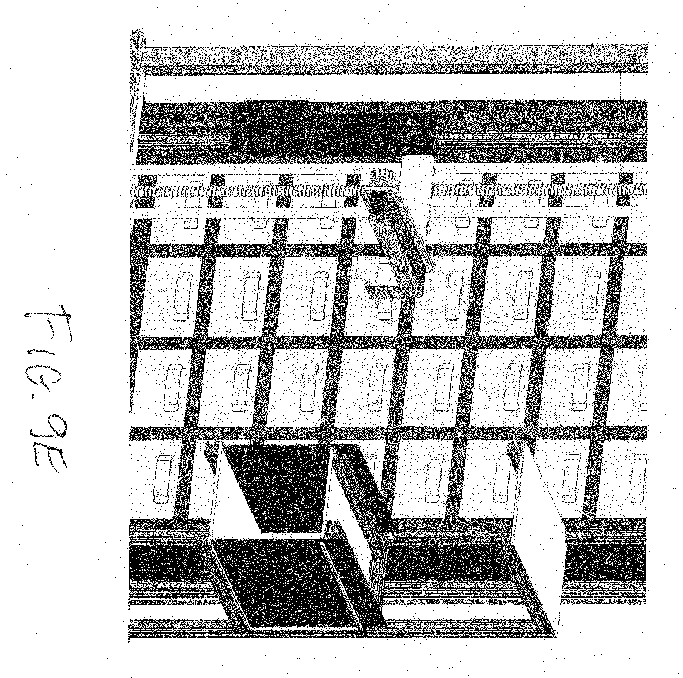

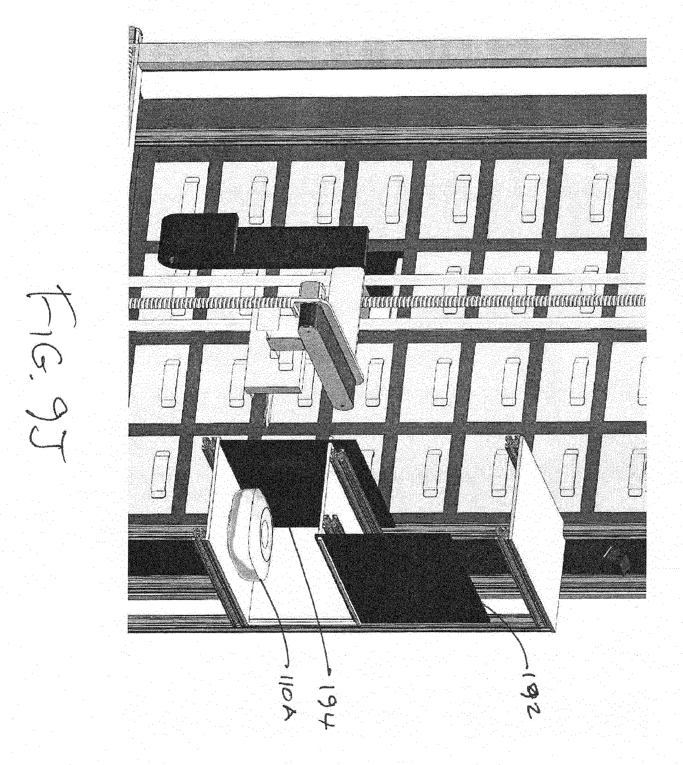

Figs 9A through 9L provide an incremental series which demonstrates the function of the Cartesian system in moving the End Effector from a selected Cubby 116A to the Scanner 171 (Figs 9A-9C), the return of the selected Portion Container Carrier 181A and Portion Container 110A from that Scanner and transport back to the Cubby (Figs 9D-9E), moving the Carrier and Container to the Hatch (Figs 9E-9I), the delivery of that Portion Container to the Customer and reclosing of the Hatch (Figs 9J-9L).

The Transport System plays two major roles in the overall system:
1) Identifying the content and location of each Portion Container After the Portion Containers are randomly loaded into the Cubbies by the Deliver Partner the Food Station Control Logic commands the Transport System to initiate the data retrieval required for the entire operation of the system by scanning the labels of each Portion Container. To that end the Transport System will methodically pick up one Portion container after another, transport them to the scanning camera located within the transport space. The scanner scans the identifying label, unique to every Portion Container and stores that information in the Food Station Control Logic, including the identification of the specific Portion Container location within the station. The Transport System returns each Portion Container Carrier to its Cubby before repeating the process with the next Portion Container.
2) Delivering Portion Containers for Customer collection: When Customers identify themselves to the Station, the Food Station Control Logic communicates with the Transport System and directs the transport system to pick up the correct Portion Container and deliver it to the Hatch. When the Portion Container is removed from the Portion Container Carrier the Transport System returns the Portion Container Carrier to its cubby and waits for the next command from the Food Station Control Logic.

When the Customer comes back after eating (or when the customer comes to collect their next meal), the customer may bring the empty Portion Container back to the station. By inputting a "Return Container" command, the Hatch's Front Shutter opens, and the Customer is allowed to place the container into the Hatch. This may require no Customer Identification. The Front Shutter then closes, and the Rear Shutter opens, allowing the Transport System to either just move the contain to the Storage Area or to bring the container to the Scanner where its identification is noted for credit to the Customer. The Customer may be prompted to give feedback about the quality of his meal which may be used to adjust future menus in general or future offerings to this Customer.

There are four types of interaction between persons and the system;
1) The interaction with the customer when ordering the meal,
2) The interaction with the Delivery Partner when loading the filled Portion Containers into the Station,
3) The interaction with the Customer when collecting the meal,
4) The interaction with the Customer when returning he spent Portion Container, and
5) The interaction with the Delivery Partner when collecting the returned Portion Containers.

The Customer may select and order their meal in a variety of ways. In the preferable method an App is downloaded to the customer's Smartphone for the customer to register with the system. The App may have knowledge of or access to information about every Station everywhere and each Station's available menu at any given time. That App may have the ability to know and apply the Customer's location at any given time in order to offer access to only nearby Stations. That App may include a Customer Registry allowing the Customer to initially Sign-up and load relevant personal information, payment information, food type preferences, dietary restrictions and allergies, most common location of use ("home base"), etc. The Registered Customer may be assigned a Customer Number. That Customer Number may be used as the Customer's Identification Key. The Customer may also be required to select an Account Password for Identification.

Alternately, the Station may have a user interface allowing the Customer to input Customer Identification Information to gain access to the system, and to then make meal decisions for a later time directly with the Station. In this way the Customer could conveniently arrange the next day's order while picking-up today's meal. The Station could prompt the Customer such as "Would you like to place another order" or "10% off if you place another order within the next 15 minutes", etc., thereby promoting additional sales before the customer has eaten today's meal and is presumably hunger.

Another communication option between Consumer and the System may be an Online Site accessible to the Customer, say from the convenience of their home or office. The Account could be set up similarly to the afore-mentions Smartphone App.

Alternately, the customer may be able to order meals via a call-in phone number.

The Delivery Partner arrives at the Station early on Day 0, unlocks Side Doors 196L and 196R of the Station and checks for unclaimed meals and returned empty Portion Containers, which are then removed and set aside. The Delivery Partner then loads the new Portion Containers, one per cubby, in no specific order or position. If the Storage Unit containing used portion containers is external of the Station, the Delivery Partner then visits the Storage Unit, and collects any used Portion Containers therein.

Customers approach the Station and identify themselves. Recognizing the Customer, the Food Station on-board Logic directs the transport system to pick up and deliver the Portion Containers into the Hatch. One Portion Container at a time.

The Food Station Control Logic recognizes when a Customer has not collected his meal by some period after the pre-designated pick-up time, then sends a reminder, such as by text or notice to the Customer's Smartphone, or by email or by phone call. Based on feedback which may then be provided by the Customer, the logic system may; keep food at heated temperature for an additional specified time, chill the food to avoid spoilage and reheat based on feedback from Customer, or chill the Portion Container and inform food Delivery partner to remove un-claimed Portion Containers during the following morning visit.

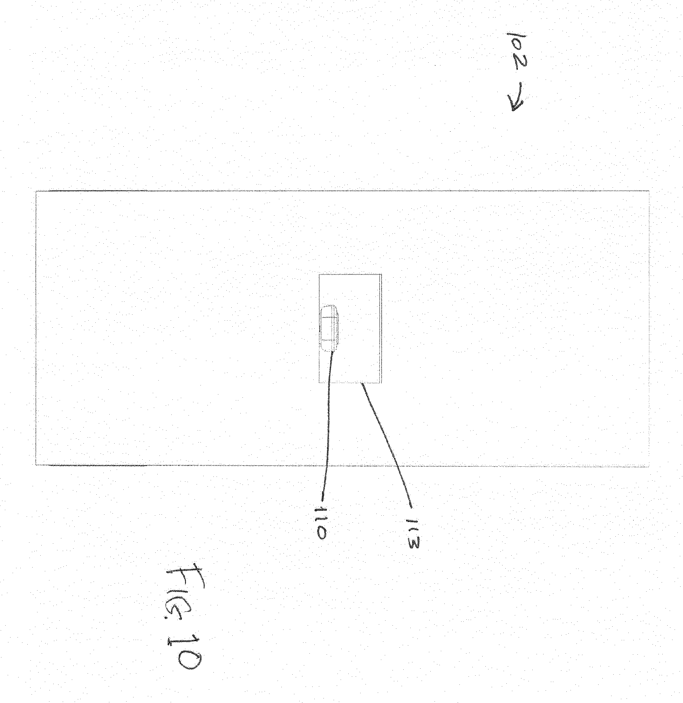

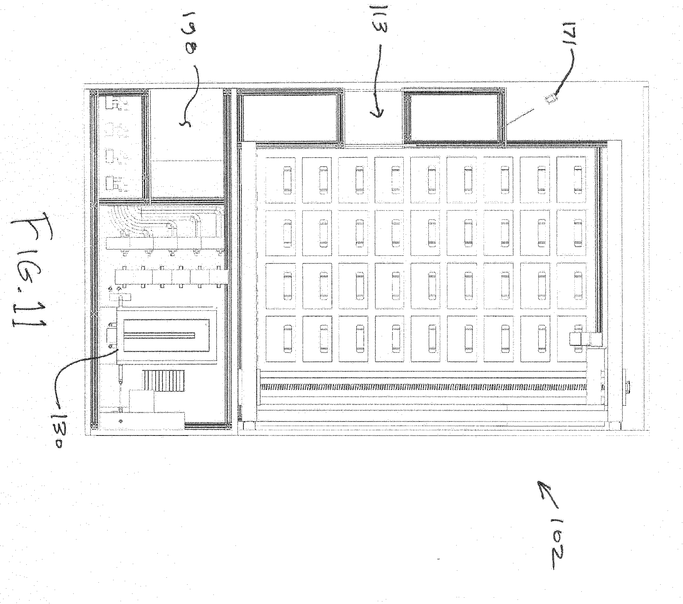

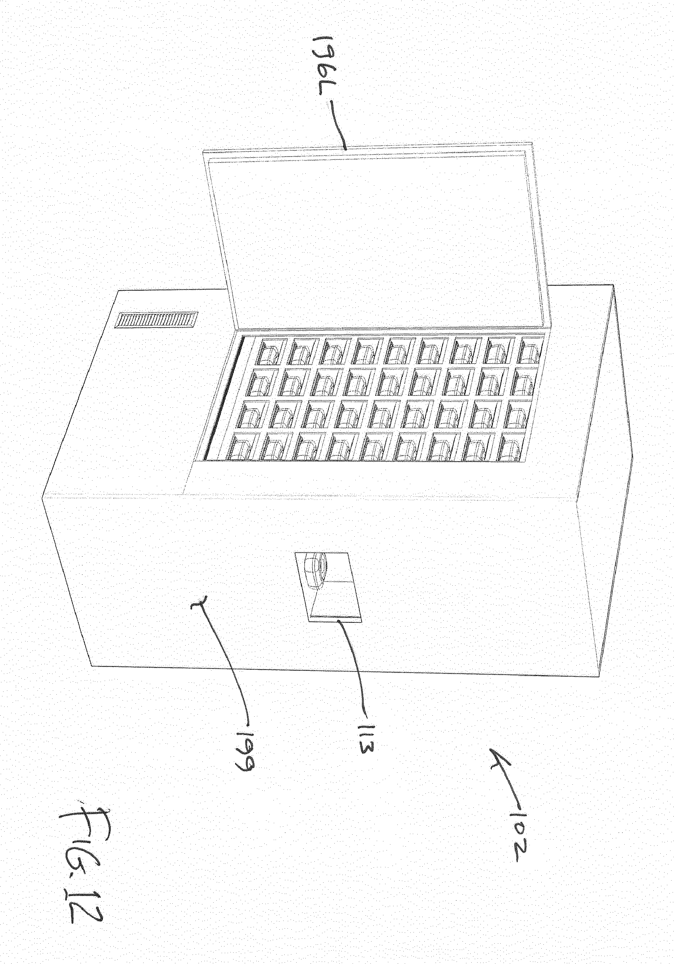

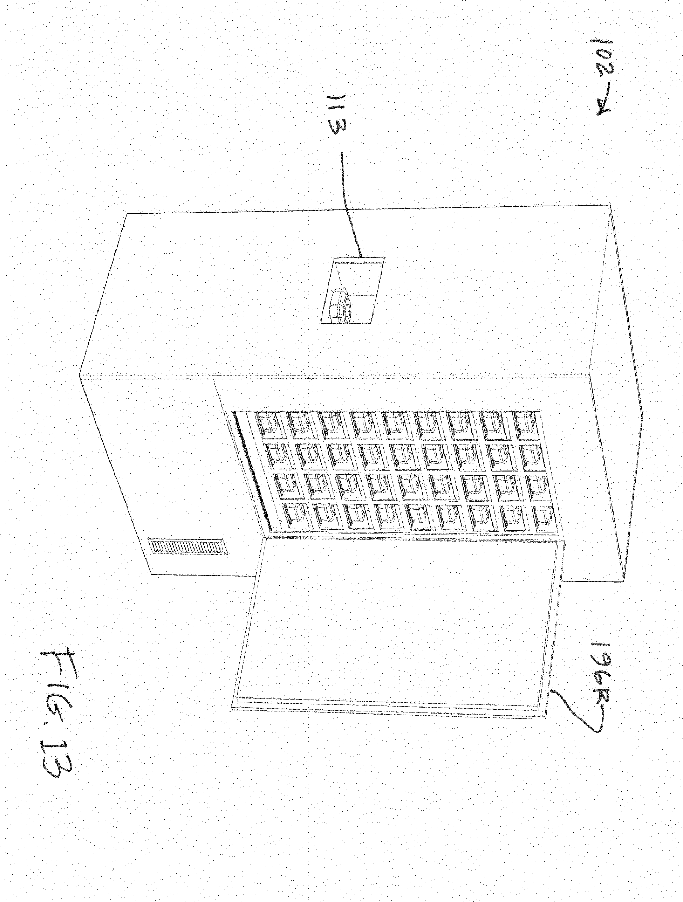

Referring to Figs 10 and 11, the 49" width and 72" height of the Station allow it to be moved through a standard commercial door, with an opening of 36" wide and 80" tall. The Station includes 72 Cubbies, and the Hatch is positioned approximately halfway up the Station's height for most-convenient customer access (See Figs 10 and 11). Referring to Figs 12 and 13, the Left and Right Side Panels (Delivery Partner Access Doors) 196L and 196R are large to ease loading, provide visibility of all Cubbies, enable cleaning, and are insulated as they serve as the outside wall of the Cubbies. They allow quick and easy access to the Delivery partner to place the Portion Containers into the Cubbies and to do other internal tasks.

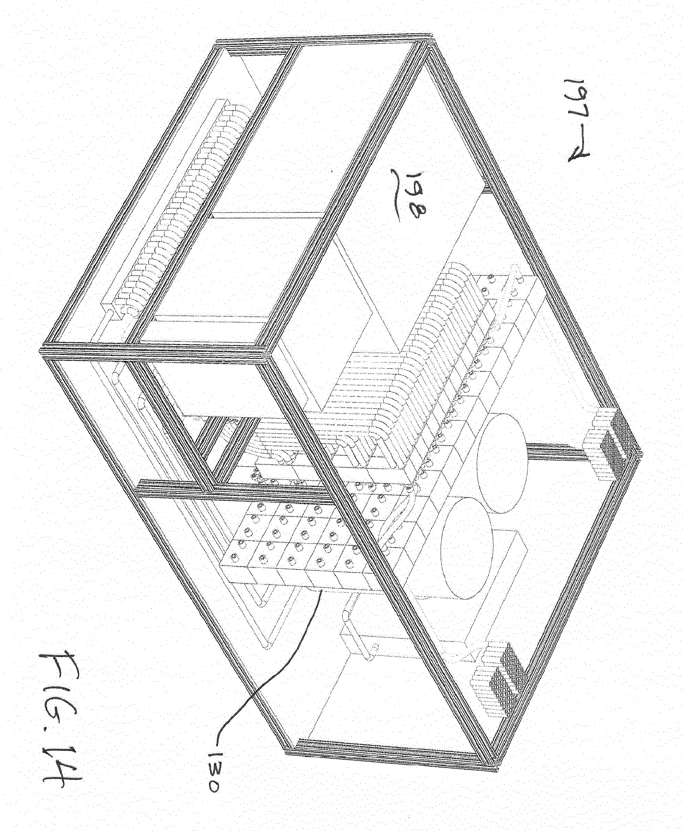

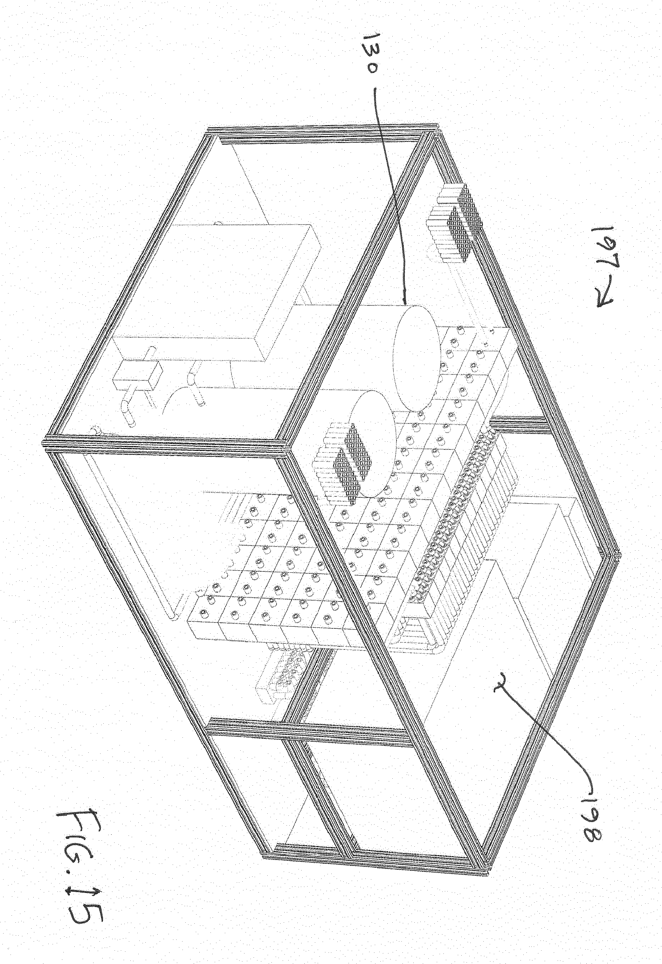

Referring to Figs 14 and 15, the lower portion 197 of the Station is dedicated to house the cooling and heating system and various controls. It also houses the System Computer 198 and provides for the structural integrity of the entire unit, including the Transport System and the Cubbies. The Station walls 199 include adequate thermal and acoustic insulation and are structurally designed to carry the weight of the rest of the system.

To more efficiently utilize the space within the cubic-shaped Station, the Cubbies have a cubic outer shape.

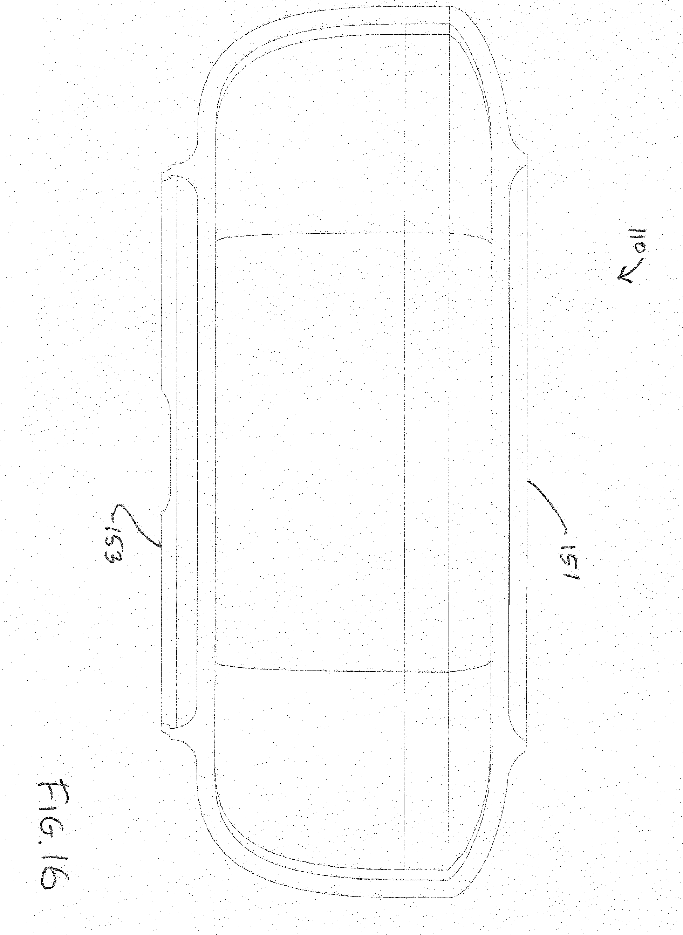

Referring to Fig 16, the Portion Containers have a round shape which, being similar to most dishware, is familiar to Customers as a food serving device. When separated, the lids 151 of the containers are easily stackable and the bases 153 of the containers are easily and compactly nestable.

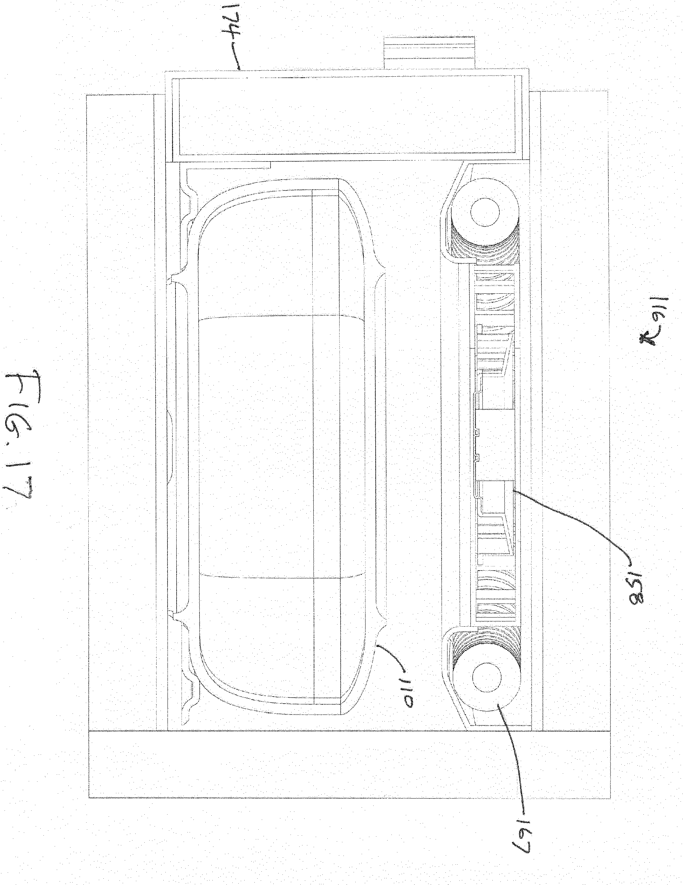

Referring to Figs 17, 18, and 20, it can be appreciated that air circulation is improved for heating and cooling of the Portion Containers within the Cubbies because the cubbies have a cubic inner chamber, and the portion containers have a rounded shape.

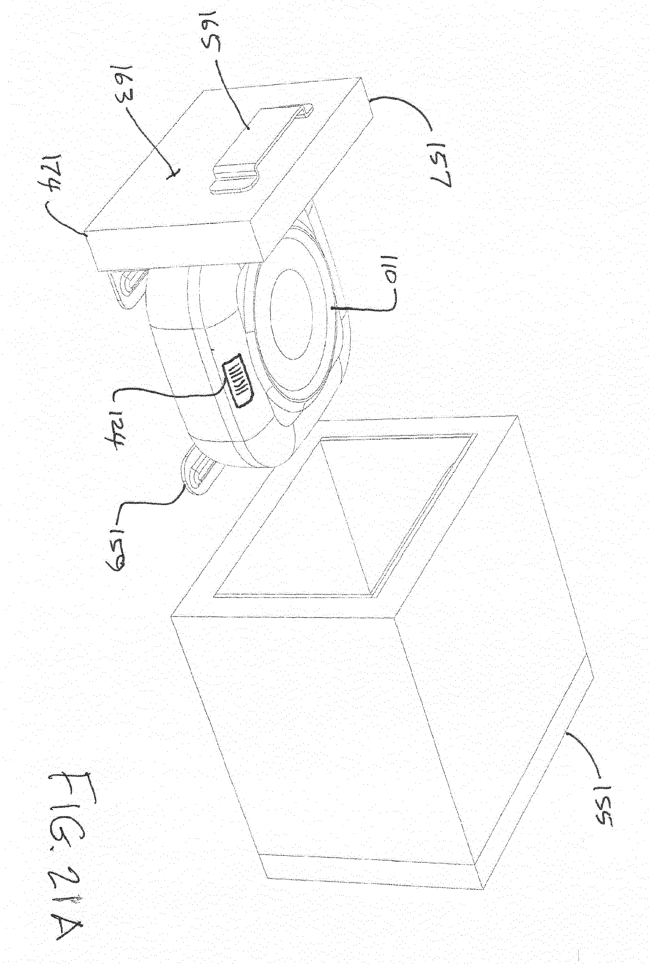

Referring to Fig 21A, the Cubbies are insulated to save energy and facilitate easy loading and removal of the Portion Containers. The Cubbies include enough internal space for the Portion Container a Heat Transfer Element 167 and insulation on all four sides. The back 155 of each Cubby is open but is covered by the Station Wall.

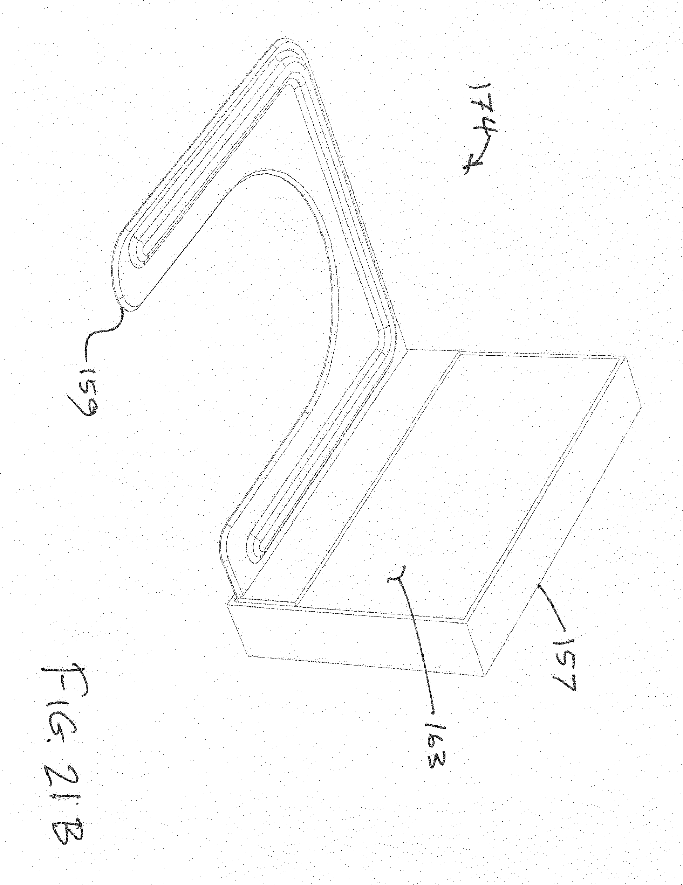

Referring to Figs 21A and 21B, the front 157 of each Cubby is part of the Portion Container Carrier comprising an insulated wall, connected to a horseshoe shaped horizontal metal plate 159 designed to support the Portion Container. The Portion Container Carrier serves to support the Portion Containers as it is transported by the transport system from the cubby to the hatch to be collected by the Customer, or to the scanning camera during the identification routine.

The Station logic system may include features allowing the customization of temperature of each Portion Container that may be based on Customer selection and/or its contents.

The Portion Container Carrier supports the Portion Container while in its Cubby, for better air circulation, and while being transported by the Transport System. The Carrier consists of two basic elements: the horseshoe-shaped support plate which is permanently fixed to the removable front panel of the cubby, including a 1" thick insulated block 163. The insulated front features a handle portion 165 that is adapted to be grasped by the End-Effector of the cartesian transport system. The horse-shoe shape is Designed and shaped to slide out from under the Portion Container lower rim to be left in the Hatch while the Carrier is being withdrawn.

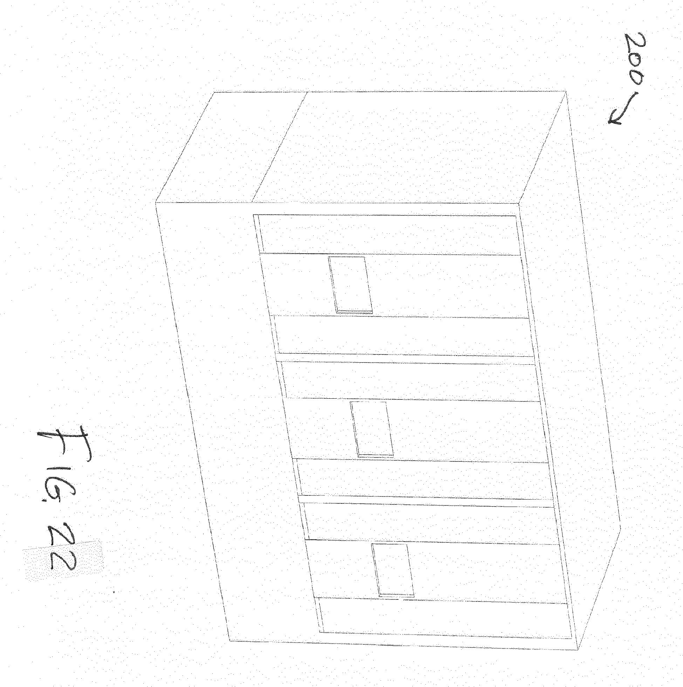

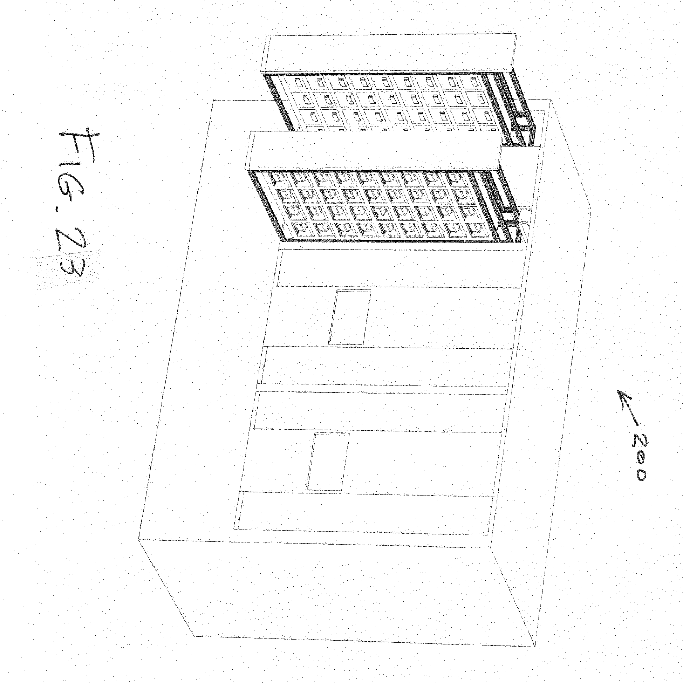

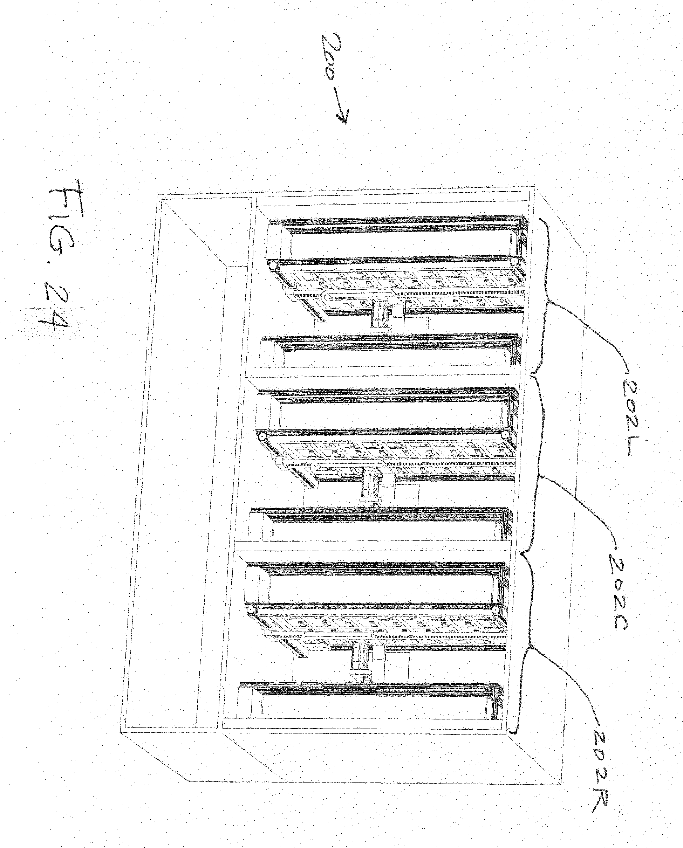

A second Station 200 constructed of multiple Modules 202L, 202C and 202R, and intended to serve a larger number of Customers is shown in Figs 22-24. The basic operational concept of each module remains the same as the first embodiment except that additional modules are added, each including its own Cubbies, Hatch, Transport System, and End Effector. All modules are connected to a single Control Logic. The alternate front-loading of the modules enables a compact manner for the Delivery Partner to service the Station. A virtually unlimited expansion is enabled by the simple addition of Modules in side-by-side fashion. The Customer arriving to collect the food is directed to the specific one of the Hatches where the portion containers may be collected.

This expanded version allows the Food Partner to prepare additional un-ordered meals, snacks, desserts, side dishes, etc., to be deposited into the Station for spontaneous purchasers. Thereby being able to accommodate Customers who did not order in advance or who find themselves hungrier than originally expected. The Station could prompt the customer to add to their pre ordered purchase... "Would you like fries with that?" ... "Would you like to add a dessert?". Such items may carry a premium cost, due to the risk the Food Partner takes and to encourage Customers to order in advance.

This expanded Station could be further expanded by the addition of Modules according to the traffic expected in the area it is to be placed. It could be installed in private or public locations, such as airport terminals or train stations, where people could pick up a pre ordered meal before boarding. Ballparks, beaches, campgrounds, and other recreational venues are perfect candidates for setting up such a Station. High-end restaurants could set up dedicated Stations at airports or other public places, such as downtowns and business centers.

## Claims

1. A food station (102) comprising:
a plurality of cubbies (116), each cubby (116) sized to enclose a food portion container (110), and each cubby (116) including a food portion container carrier (174) that supports the food portion container (110) whilst it is in the cubby (116) and while being transported by a transport system, the carrier comprising a horseshoe-shaped support plate that is fixed to a removeable front panel of the cubby;
a collection hatch (113) large enough for the food portion container (110) to pass therethrough, the collection hatch (113) being externally accessible;
an internal transport system (118) including an end effector (172) that temporarily couples to the food portion container carrier (174) of a selected cubby (116) and controllably moves the food portion container carrier (174) within the food station (102) from the selected cubby (116) to the collection hatch (113);
a heating system (130) that selectively provides heat to each of the plurality of cubbies (116) independently of the other cubbies (116), with the heating being independently controllable for each of the plurality of cubbies (116);
a cooling system (130) that selectively removes heat from each of the plurality of cubbies (116) independently of the other cubbies (116), with the cooling being independently controllable for each of the plurality of cubbies (116);
a control system (115) that controls the heating and cooling of each of the plurality of cubbies (116) and the movement of the internal transport system (118), the control system (115) including a memory for storing information including preparation instructions for each of the plurality of cubbies (116).

2. A food station (102) according to claim 1, wherein the portion container carrier (174) includes a front plate (163) with a handle (165) for coupling to the end effector (172).

3. A food station (102) according to claim 2, wherein the collection hatch (113) includes an external shutter (192) that can be actuated by the control system (115) to selectively control the external accessibility of the collection hatch.

4. A food station (102) according to claim 3, wherein the collection hatch (113) includes an internal shutter (194) that can be actuated by the control system (115) to selectively deny access from the collection hatch (113) to an interior of the food station (102) while the external shutter (192) is open.

5. A food station (102) according to according to any preceding claim, wherein the internal transport system (118) includes controllable mechanical actuators that translate the end effector (172) in three orthogonal directions, each forming an axis of a Cartesian coordinate system.

6. A food station (102) according to claim 5, wherein the controllable mechanical actuators include a first motor for turning a first drive spindle (166) to translate the end effector (172) along a first Cartesian coordinate system axis, and a second motor for turning a second drive spindle (166) to translate the end effector (172) along a second Cartesian coordinate system axis, and wherein a stepper motor drive belt (182) provides movement along a third Cartesian coordinate system axis.

7. A food station (102) according to any preceding claim, further comprising a user interface, wherein the movement by the internal transport system (118) of the portion container carrier (174) within the food station (102) from the selected cubby (116) to the collection hatch (113) is prompted by an input to the user interface.

8. A food station (102) according to any preceding claim, wherein the memory is provided with stored information that includes at least one from a group comprising: a scheduled time for collection of the food portion container (110) by a customer; a key for customer identity verification; and meal preparation instructions corresponding to the food portion container (110).

9. A food station (102) according to any preceding claim and further comprising communications electronics capable of receiving information via a smartphone application or an on-line website, and the information stored on the memory includes information received via the smartphone application or the on-line website.

10. A food station (102) according to any preceding claim and further comprising a scanner (171), the memory being provided with information read by the label scanner (171) from a label printed ion the food portion container (110), and wherein the internal transport system (118) controllably moves the food portion container (110) within the food station (102) from the selected cubby (116) to an internal identification site that includes a label scanner (171).

11. A food station (102) according to any preceding claim and further comprising a plurality of tubes (152), and wherein the heating system heats and pumps a first thermal fluid through one or more of the plurality of tubes (152), and the cooling system cools and pumps a second thermal fluid through one or more of the plurality of tubes (152) and wherein each of the plurality of cubbies (116) includes its own heating and cooling element through which the first and second thermal fluids can flow;
wherein the heating system includes a first plurality of valves (148) that can be controlled by the control system (115) to selectively direct the first thermal fluid through the heating and cooling element of each of the plurality of cubbies (116); and
wherein the heating system further includes a second plurality of valves (148) that can be controlled by the control system (115) to selectively direct the second thermal fluid through the heating and cooling element of each of the plurality of cubbies (116).

12. A food station (102) according to any preceding claim, wherein each of the plurality of cubbies (116) incudes an internal fan (158).

13. A food station (102) according to any preceding claim, wherein each of the plurality of cubbies (116) has a cuboid shape that is defined by cubby walls (196) that include thermal insulation.

## Patentansprüche

1. Lebensmittelstation (102), umfassend:
eine Vielzahl von Fächern (116), wobei jedes Fach (116) so bemessen ist, dass es einen Lebensmittelportionsbehälter (110) umschließen kann, und wobei jedes Fach (116) einen Lebensmittelportionsbehälterträger (174) enthält, der den Lebensmittelportionsbehälter (110) stützt, während er sich in dem Fach (116) befindet und während er durch ein Transportsystem transportiert wird, wobei der Träger eine hufeisenförmige Stützplatte umfasst, die an einer abnehmbaren Frontplatte des Fachs befestigt ist;
eine Entnahmeöffnung (113), die groß genug ist, damit der Lebensmittelportionsbehälter (110) hindurchtreten kann, wobei die Entnahmeöffnung (113) von außen zugänglich ist;
ein internes Transportsystem (118), das einen Endeffektor (172) enthält, der sich vorübergehend an den Lebensmittelportionsbehälterträger (174) eines ausgewählten Fachs (116) koppelt und den Lebensmittelportionsbehälterträger (174) innerhalb der Lebensmittelstation (102) steuerbar aus dem ausgewählten Fach (116) zu der Entnahmeöffnung (113) bewegt;
ein Heizsystem (130), das selektiv jedem der Vielzahl von Fächern (116) unabhängig von den anderen Fächern (116) Wärme bereitstellt, wobei das Heizsystem jedes der Vielzahl von Fächern (116) unabhängig steuerbar ist;
ein Kühlsystem (130), das selektiv Wärme aus jedem der Vielzahl von Fächern (116) unabhängig von den anderen Fächern (116) abführt, wobei die Kühlung für jedes der Vielzahl von Fächern (116) unabhängig steuerbar ist;
ein Steuersystem (115), das die Heizung und Kühlung jedes der Vielzahl von Fächern (116) und die Bewegung des internen Transportsystems (118) steuert, wobei das Steuersystem (115) einen Speicher zum Speichern von Informationen enthält, die Zubereitungsanweisungen für jedes der Vielzahl von Fächern (116) enthalten.

2. Lebensmittelstation (102) nach Anspruch 1, wobei der Portionsbehälterträger (174) eine Frontplatte (163) mit einem Griff (165) zum Koppeln mit dem Endeffektor (172) enthält.

3. Lebensmittelstation (102) nach Anspruch 2, wobei die Entnahmeöffnung (113) einen äußeren Deckel (192) enthält, der durch das Steuersystem (115) betätigt werden kann, um die Zugänglichkeit der Entnahmeöffnung von außen selektiv zu steuern.

4. Lebensmittelstation (102) nach Anspruch 3, wobei die Entnahmeöffnung (113) einen inneren Deckel (194) enthält, der durch das Steuersystem (115) betätigt werden kann, um selektiv den Zugang von der Entnahmeöffnung (113) zu einem Inneren der Lebensmittelstation (102) zu verweigern, während der äußere Deckel (192) geöffnet ist.

5. Lebensmittelstation (102) nach einem vorhergehenden Anspruch, wobei das interne Transportsystem (118) steuerbare mechanische Aktuatoren enthält, die den Endeffektor (172) in drei orthogonale Richtungen verschieben, von denen jede eine Achse eines kartesischen Koordinatensystems bildet.

6. Lebensmittelstation (102) nach Anspruch 5, wobei die steuerbaren mechanischen Aktuatoren einen ersten Motor zum Drehen einer ersten Antriebsspindel (166) zum Verschieben des Endeffektors (172) entlang einer ersten Achse eines kartesischen Koordinatensystems und einen zweiten Motor zum Drehen einer zweiten Antriebsspindel (166) zum Verschieben des Endeffektors (172) entlang einer zweiten Achse eines kartesischen Koordinatensystems enthalten, und wobei ein Schrittmotor-Antriebsriemen (182) eine Bewegung entlang einer dritten Achse eines kartesischen Koordinatensystems bereitstellt.

7. Lebensmittelstation (102) nach einem vorhergehenden Anspruch, ferner eine Benutzerschnittstelle umfassend, wobei die Bewegung des Portionsbehälterträgers (174) durch das interne Transportsystem (118) innerhalb der Lebensmittelstation (102) von dem ausgewählten Fach (116) zu der Entnahmeöffnung (113) durch eine Eingabe an der Benutzerschnittstelle ausgelöst wird.

8. Lebensmittelstation (102) nach einem vorhergehenden Anspruch, wobei dem Speicher gespeicherte Informationen bereitgestellt werden, die mindestens eines aus einer Gruppe enthalten, die Folgendes umfasst: eine geplante Zeit zur Entnahme des Lebensmittelportionsbehälters (110) durch einen Kunden; einen Schlüssel zur Kundenidentitätsüberprüfung; und Speisenzubereitungsanweisungen, die dem Lebensmittelportionsbehälter (110) entsprechen.

9. Lebensmittelstation (102) nach einem vorhergehenden Anspruch und ferner Kommunikationselektronik umfassend, die in der Lage ist, Informationen über eine Smartphone-Anwendung oder eine Online-Website zu empfangen, und wobei die im Speicher gespeicherten Informationen Informationen enthalten, die über die Smartphone-Anwendung oder die Online-Website empfangen werden.

10. Lebensmittelstation (102) nach einem vorhergehenden Anspruch und ferner einen Scanner (171) umfassend, wobei dem Speicher Informationen bereitgestellt werden, die durch den Etikettenscanner (171) von einem auf dem Lebensmittelportionsbehälter (110) aufgedruckten Etikett gelesen werden, und wobei das interne Transportsystem (118) den Lebensmittelportionsbehälter (110) innerhalb der Lebensmittelstation (102) steuerbar von dem ausgewählten Fach (116) zu einem internen Identifikationsort bewegt, der einen Etikettenscanner (171) enthält.

11. Lebensmittelstation (102) nach einem vorhergehenden Anspruch und ferner eine Vielzahl von Rohren (152) umfassend und wobei das Heizsystem ein erstes Thermofluid erhitzt und durch eines oder mehrere der Vielzahl von Rohren (152) pumpt und das Kühlsystem ein zweites Thermofluid kühlt und durch eines oder mehrere der Vielzahl von Rohren (152) pumpt und wobei jedes der Vielzahl von Fächern (116) sein eigenes Heiz- und Kühlelement enthält, durch das das erste und das zweite Thermofluid fließen können;
wobei das Heizsystem eine erste Vielzahl von Ventilen (148) enthält, die durch das Steuersystem (115) gesteuert werden können, um das erste Thermofluid selektiv durch das Heizund Kühlelement jedes der Vielzahl von Fächern (116) zu leiten; und
wobei das Heizsystem ferner eine zweite Vielzahl von Ventilen (148) enthält, die durch das Steuersystem (115) gesteuert werden können, um das zweite Thermofluid selektiv durch das Heiz- und Kühlelement jedes der Vielzahl von Fächern (116) zu leiten.

12. Lebensmittelstation (102) nach einem vorhergehenden Anspruch, wobei jedes der Vielzahl von Fächern (116) einen internen Lüfter (158) enthält.

13. Lebensmittelstation (102) nach einem vorhergehenden Anspruch, wobei jedes der Vielzahl von Fächern (116) eine quaderförmige Form aufweist, die durch Fachwände (196) definiert ist, die eine Wärmeisolierung enthalten.

## Revendications

1. Station alimentaire (102) comprenant :
une pluralité de casiers (116), chaque casier (116) étant dimensionné pour enfermer un récipient de portion alimentaire (110), et chaque casier (116) comprenant un support (174) de récipient de portion alimentaire qui supporte le récipient de portion alimentaire (110) pendant qu'il se trouve dans le casier (116) et pendant qu'il est transporté par un système de transport, le support comprenant une plaque de support en forme de fer à cheval qui est fixée à un panneau avant amovible du casier ;
une trappe de collecte (113) suffisamment grande pour que le récipient de portion alimentaire (110) puisse passer à travers celle-ci, la trappe de collecte (113) étant accessible de l'extérieur ;
un système de transport interne (118) comprenant un effecteur terminal (172) qui se couple temporairement au support (174) de récipient de portion alimentaire d'un casier sélectionné (116) et déplace de manière commandée le support (174) de récipient de portion alimentaire à l'intérieur de la station alimentaire (102) à partir du casier sélectionné (116) jusqu'à la trappe de collecte (113) ;
un système de chauffage (130) qui fournit sélectivement de la chaleur à chacun de la pluralité de casiers (116) indépendamment des autres casiers (116), le chauffage pouvant être commandé indépendamment pour chacun de la pluralité de casiers (116) ;
un système de refroidissement (130) qui élimine sélectivement la chaleur de chacun de la pluralité de casiers (116) indépendamment des autres casiers (116), le refroidissement pouvant être commandé indépendamment pour chacun de la pluralité de casiers (116) ;
un système de commande (115) qui commande le chauffage et le refroidissement de chacun de la pluralité de casiers (116) et le mouvement du système de transport interne (118), le système de commande (115) comprenant une mémoire destinée à stocker des informations comprenant des instructions de préparation pour chacun de la pluralité de casiers (116).

2. Station alimentaire (102) selon la revendication 1, ledit support (174) de récipient de portion comprenant une plaque avant (163) avec une poignée (165) en vue d'un couplage à l'effecteur d'extrémité (172).

3. Station alimentaire (102) selon la revendication 2, ladite trappe de collecte (113) comprenant un obturateur externe (192) qui peut être actionné par le système de commande (115) afin de commander sélectivement l'accessibilité externe de la trappe de collecte.

4. Station alimentaire (102) selon la revendication 3, ladite trappe de collecte (113) comprenant un obturateur interne (194) qui peut être actionné par le système de commande (115) pour refuser sélectivement l'accès à partir de la trappe de collecte (113) à un intérieur de la station alimentaire (102) pendant que l'obturateur externe (192) est ouvert.

5. Station alimentaire (102) selon une quelconque revendication précédente, ledit système de transport interne (118) comprenant des actionneurs mécaniques pouvant être commandés qui déplacent l'effecteur terminal (172) dans trois directions orthogonales, chacune formant un axe d'un système de coordonnées cartésiennes.

6. Station alimentaire (102) selon la revendication 5, lesdits actionneurs mécaniques pouvant être commandés comprenant un premier moteur destiné à faire tourner un premier arbre d'entraînement (166) pour déplacer l'effecteur terminal (172) le long d'un premier axe de système de coordonnées cartésiennes, et un second moteur destiné à faire tourner un second arbre d'entraînement (166) pour déplacer l'effecteur terminal (172) le long d'un deuxième axe de système de coordonnées cartésiennes, et une courroie d'entraînement (182) de moteur pas à pas assurant le mouvement le long d'un troisième axe de système de coordonnées cartésiennes.

7. Station alimentaire (102) selon une quelconque revendication précédente, comprenant en outre une interface utilisateur, ledit mouvement par le système de transport interne (118) du support (174) de récipient de portion à l'intérieur de la station alimentaire (102) à partir du casier sélectionné (116) jusqu'à la trappe de collecte (113) étant déclenché par une entrée dans l'interface utili sateur.

8. Station alimentaire (102) selon une quelconque revendication précédente, ladite mémoire étant dotée d'informations stockées qui comprennent au moins l'une parmi un groupe comprenant : une heure programmée pour la collecte du récipient de portion alimentaire (110) par un client ; une clé pour la vérification de l'identité du client ; et des instructions de préparation de repas correspondant au récipient de portion alimentaire (110).

9. Station alimentaire (102) selon une quelconque revendication précédente et comprenant en outre une électronique de communication capable de recevoir des informations par l'intermédiaire d'une application pour téléphone intelligent ou d'un site web en ligne, et les informations stockées sur la mémoire comprennent des informations reçues par l'intermédiaire de l'application pour téléphone intelligent ou du site web en ligne.

10. Station alimentaire (102) selon une quelconque revendication précédente et comprenant en outre un dispositif de balayage (171), la mémoire étant dotée d'informations lues par le dispositif de balayage d'étiquettes (171) à partir d'une étiquette imprimée sur le récipient de portion alimentaire (110), et ledit système de transport interne (118) déplaçant de manière commandée le récipient de portion alimentaire (110) à l'intérieur de la station alimentaire (102) à partir du casier sélectionné (116) jusqu'à un site d'identification interne qui comprend un dispositif de balayage d'étiquettes (171).

11. Station alimentaire (102) selon une quelconque revendication précédente et comprenant en outre une pluralité de tubes (152), et ledit système de chauffage chauffant et pompant un premier fluide thermique à travers un ou plusieurs de la pluralité de tubes (152), et ledit système de refroidissement refroidissant et pompant un second fluide thermique à travers un ou plusieurs de la pluralité de tubes (152) et chacun de la pluralité de casiers (116) comprenant son propre élément de chauffage et de refroidissement à travers lequel les premier et second fluides thermiques peuvent circuler ;
ledit système de chauffage comprenant une première pluralité de soupapes (148) qui peuvent être commandées par le système de commande (115) pour diriger sélectivement le premier fluide thermique à travers l'élément de chauffage et de refroidissement de chacun de la pluralité de casiers (116) ; et
ledit système de chauffage comprenant en outre une seconde pluralité de soupapes (148) qui peuvent être commandées par le système de commande (115) pour diriger sélectivement le second fluide thermique à travers l'élément de chauffage et de refroidissement de chacun de la pluralité de casiers (116).

12. Station alimentaire (102) selon une quelconque revendication précédente, chacun de la pluralité de casiers (116) comprenant un ventilateur interne (158).

13. Station alimentaire (102) selon une quelconque revendication précédente, chacun de la pluralité de casiers (116) comportant une forme cuboïde qui est définie par des parois de casier (196) qui comprennent une isolation thermique.
